## Europäisches Patentamt
## European Patent Office
## Office européen des brevets

(11) Veröffentlichungsnummer: **0 067 299**
**B2**

(12) NEUE EUROPÄISCHE PATENTSCHRIFT

(45) Veröffentlichungstag der neuen Patentschrift: **13.06.90**

(21) Anmeldenummer: **82103761.1**

(22) Anmeldetag: **03.05.82**

(51) Int. Cl.⁵: **C 10 B 57/10,** F 26 B 3/26, F 26 B 17/16

(54) Verfahren und Vorrichtung zum Betrieb einer Kokereianlage.

(30) Priorität: **11.06.81 DE 3123141**

(43) Veröffentlichungstag der Anmeldung:
**22.12.82 Patentblatt 82/51**

(45) Bekanntmachung des Hinweises auf die
Patenterteilung:
**28.08.85 Patenblatt 85/35**

(45) Bekanntmachung des Hinweises auf die
Entscheidung u¨ber den Einspruch:
**13.06.90 Patentblatt 90/24**

(84) Benannte Vertragsstaaten:
**AT BE DE FR GB IT LU NL SE**

(56) Entgegenhaltungen:
DE-A-1 534 204
DE-A-2 434 827          DE-C- 720 159
DE-B-2 626 653          FR-A-1 478 224
DE-C- 222 917           US-A-1 905 883
DE-C- 453 464           US-A-2 552 014
DE-C- 492 753           US-A-3 031 773
DE-C- 638 198

(73) Patentinhaber: **Krupp Koppers GmbH**
**Altendorfer Strasse 120**
**D-4300 Essen 1 (DE)**

(72) Erfinder: **Petrovic, Vladan, Dr. Dipl.-Ing.**
**Adelgundenweg 65**
**D-4300 Essen 1 (DE)**
Erfinder: **Schmid, Karl, Dr. Dipl.-Chem.**
**Hohe Buchen 14**
**D-4300 Essen 1 (DE)**
Erfinder: **Schmidt-Traub, Henner, Dr. Dipl.-Ing.**
**Byfangerstrasse 8**
**D-4300 Essen 15 (DE)**

**Beschreibung**

Die Erfindung betrifft ein Verfahren zum Betrieb einer Kokereianlage, bei dem die Kobsöfen periodisch mit vorerhitter Kohle beschickt werden und der zeugte Koks einer Trockenkühlung mittels eines gasförmigen Kühlmediums unterworfen wird, wobei die aus der Kokstrockenkühlung abgeführte Wärme direkt oder indirekt zur Kohlevorerhitzung genutzt wird. Ferner betrifft die Erfindung einen speziellen Wanderschichttrockner, der bei Anwendung des erfindungsgemässen Verfahrens vorteilhafterweise zur Kohlevorerhitzung eingesetzt werden kann.

Bei Verfahren der genannten Art ist es bereits bekannt, die Anlagen zur Kokstrockenkühlung und zur Kohlevorerhitzung durch einen gemeinsamen Gaskreislauf miteinander zu verbinden. Ein solches Verfahren wird in der DE-A-23 04 541, Fig. 8, beschrieben. Dabei ist vorgesehen, dass das aus dem Kokstrockenkühler austretende heisse Gas insgesamt nach entsprechender Abkühlung und Entstaubung von unten so in den Kohlevorerhitzer eingeleitet wird, dass die von oben eingebrachte nasse Kohle in Form einer Wirbelschicht vorliegt. Anschliessend wird das oben aus dem Kohlevorerhitzer austretende Gas wieder in den Unterteil des Kokstrockenkhlers eingeleitet. Bei der vorstehend skizzierten Arbeitsweise, bei der die vorzuerhitzende Kohle in unmittelbaren Kontakt mit dem, Gas aus dem Kokstrockenkühler gelangt, dürften sich in der Praxis schon deshalb erhebliche Schwierigkeiten ergeben, weil der umlaufende gasstrom mit dem gesamten Wasserdampfgehalt, den das Gas im Kohlevorerhitzer aufgenommen hat, zurück in den Kokstrocknekühler gelangt. In diesem dürfte sich infolge des hohen Wasserdampfgehaltes des im Kreislauf geführten Gases am heissen Koks im erheblicher. Masse Wassergas bilden. Durch diese Wassergasreaktion wird jedoch einerseits ein nicht unbeträchtlicher Abbrand des glühenden Kokses verursacht und andererseits bringt das entstehende explosive Wassergas natürlich auch erhebliche Probleme für die Betriebssicherheit mit sich.

Aus der DE-B 23 42 184 ist ferner ein Verfahren der genannten Art bekannt, bei dem das Kreislaufgas der Kokstrockenkühlung in einem Wärmetauscher (Abhitzekessel) zunächst zur Erzeugung von Wasserdampf genutzt wird, der sowohl als Heizmedium als auch als Fliessbettmedium für die Kohlevorerhitzung verwendet wird. Die Kohlevorerhitzung erfolgt dabei einstufig in einem indirekt beheizten Wirbelschichttrockner, so dass eine sehr intensive Wärmezufuhr erforderlich ist, die sich auf die Beschaffenheit der Kohle erfahrungsgemäss nachteilig auswirkt. So ist es möglich, dass hierbei ein Zusammenbacken oder Anbakken der Kohle an den Heizrohren des Wirbelschichttrockners eintritt. Ebenso kann ein örtliches Überhitzen der Kohlepartikel erfolgen, wodurch Veränderungen in den verkokungstechnischen Eigenschaften auftreten konnen.

Die DE-A-24 34 827 betrifft ebenfalls ein Verfahren der genannten Art, bei dem die bei der Kokstrockenkühlung anfallende Wärme über einen Primärkreislauf abgeführt und auf einen Sekundärkreislauf übertragen wird, der der Wärmezufuhr für die Kohlevorerhitzung dient. Die Kohletrocknung und -vorerhitzung soll dabei in zwei hintereinander geschalteten Wirbelschichtbzw. Stromtrocknern erfolgen. Gemäß einer Verfahrensvariante können die Wirbelschichttrockner auch hier mit Heizflächen zur indirekten Wärmeübertragung ausgerüstet sein.

Die DE-C-720 159 beschreibt schließlich einen über einem Schwelofen angeordneten Bunker zur Vortrocknung des Schwelgutes. Hierbei sind lediglich im unteren Teil des Bunkers schmale Heizkammern vorgesehen, die durch das Abgas aus dem Schwelofen beheizt werden und an deren Außenseiten Rippen mit schrägen Rieselflächen angeordnet sind, Das Schwelgut soll dabei in verhältnismäßig dünner Schicht zwischen den Heizkammern und den Rieselflächen nach unten fließen, während für den Brüdenabzug jeweils zwischen zwei Heizkammern nach unten offene Sammelräume vorgesehen sind.

Der Erfindung liegt daher die Aufgabe zugrunde, das Verfahren der eingangs genannten Art weiter zu verbessern, wobei einerseits die bei der Kokstrockenkühlung freiwerdende Wärme möglichst optimal genutzt und andererseits der Prozeß der Kohlevorerhitzung unter möglichst schonenden, die Verkokungseigenschaften der Kohle nicht beeinträchtigenden Bedingungen durchgeführt und apparativ vereinfacht werden soll.

Das der Lösung dieser Aufgabe dienende Verfahren ist erfindungsgemäß dadurch gekennzeichnet, daß die Kohlevorerhitzung unter Verwendung eines Wanderschichttrockners durchgeführt wird, dessen Wärmeaustauschrohre mit Heißgas oder Abhitzedampf aus der Kokstrockenkühlung beheizt werden, wobei das Heißgas oder der Abhitzedampf im Gleichstrom mit der Kohle von oben nach unten durch die Wärmeaustauschrohre geleitet und die im Wanderschichttrockner anfallenden abgashaltigen Brüden in verschiedenen Ebenen aus demselben abgezogen, gereinigt, abgekühlt, kondensiert und anschließend dem Abwasser zugeführt werden.

Der Einsatz des Wandertrockners für den genannten Zweck erfordert dabei im Vergleich zum Wirbelschichttrockner einen geringeren Energieaufwand, da in diesem Falle keine Energie für die Fluidisierung der Kohle benötigt wird. Ausserdem wird im Wanderschichttrockner die Trocknung der Kohle generell unter schonenderen Bedingungen durchgeführt als im Wirbelschichttrockner. Im letzteren führt nämlich die Fluidisierung der Kohle zu einer stärkeren Kornzerkleinerung und zu einem grösseren Abtrieb, wodurch jedoch unter Umständen die kokereitechnischen Eigenschaften der Kohle ungünstig beeinflusst werden können. Durch den Fortfall der Fluidisierungseinrichtungen ist ausserdem beim Wanderschichttrockner der apparative Aufwand geringer als beim Wirbelschichttrockner.

Bei höheren Wassergehalten der Einsatzkohle kann allerdings die Fliessfähigkeit der feuchten Kohle im Wanderschichttrockner zunächst beeinträchtigt sein. Gemäss einer bevorzugten Ausführungsform wird das erfindungsgemässe Verfahren deshalb in der Weise durchgeführt, dass dem Wanderschichttrockner ein Wirbelschichttrockner vorgeschaltet ist, wobei die Kohle im Wirbelschichttrockner durch Erhitzung auf eine Temperatur zwischen 60 und 100°C zunächst nur soweit getrocknet wird, dass eine ausreichende Fliessfähigkeit derselben im Wanderschichttrockner sichergestellt ist, in dem die Kohle sodann bis auf eine Endtemperatur von 200°C erhitzt und bis auf einen Restwassergehalt von 0,1 Gew.-% getrocknet wird.

Wie bereits gesagt wurde, erfolgt die Beheizung der Wärmeaustauschrohre des Wanderschichttrockners entweder durch Heissgas (Stickstoff) oder Abhitzedampf aus der Kokstrockenkühlung. Das Heissgas weist dabei normalerweise eine Temperatur von ca. 600°C auf, und der Abhitzedampf wird in der Regel mit einem Druck zwischen 20 und 40 bar in die Wärmeaustauschrohre des Wanderschichttrockners eingeleitet. Entsprechendes gilt natürlich auch für die Wärmeaustauschrohre des Wirbelschichttrockners, sofern eine Kombination von Wirbelschicht- und Wanderschichttrockner zur Anwendung gelangt.

Damit die Kohlevorerhitzung bei einem Ausfall oder einer Betriebsstörung des Kokstrockenkühlers nicht beeinträchtigt wird, kann zusätzlich eine Verbrennungskammer vorgesehen sein, in der durch Verbrennung eines festen, flüssigen oder gasförmigen Brennstoffes Rauchgas erzeugt wird, welches gegebenenfalls zur Beheizung des Wanderschicht- und/oder Wirbelschichttrockners herangezogen werden kann. Da die bei der Verbrennung entstehenden heissen Rauchgase mit ca. 1400°C eine für diesen Zweck zu hohe Temperatur aufweisen, wird die Gastemperatur durch Zumischung von Wasserdampf auf den gewünschten Wert eingestellt. Selbstverständlich kann dieser Wasserdampf dabei ganz oder teilweise aus dem der Kohlevorerhitzung anfallenden Brüdenstrom abgezweigt werden.

Weitere Einzelheiten des erfindungsgemässen Verfahrens sowie der Vorrichtung sollen nachfolgend an Hand der Abbildungen erläutert werden. Es zeigen dabei:

Figur 1 ein Fliess-Schema des erfindungsgemässen Verfahrens, bei dem nur der Wanderschichttrockner zum Einsatz gelangt, der in diesem Falle mit Heissgas aus der Kokstrockenkühlung beheizt wird;

Figur 2 ein Fliess-Schema des erfindungsgemässen Verfahrens, bei dem eine Kombination von Wirbelschicht- und Wanderschichttrockner zur Anwendung gelangt und zur Beheizung Abhitzedampf aus der Kokstrockenkühlung verwendet wird und

Figur 3 einen Wanderschichttrockner, der zur Durchführung des erfindungsgemassen Verfahrens eingesetzt werden kann.

In den Fliess-Schemata sind selbstverständlich nur die für die Verfahrenserlauterung unbedingt erfoderlichen Anlagenteile dargestellt, während sonstige Nebeneinrichtungen sowie die Anlageteile der eigentlichen Kokerei nicht dargestellt sind.

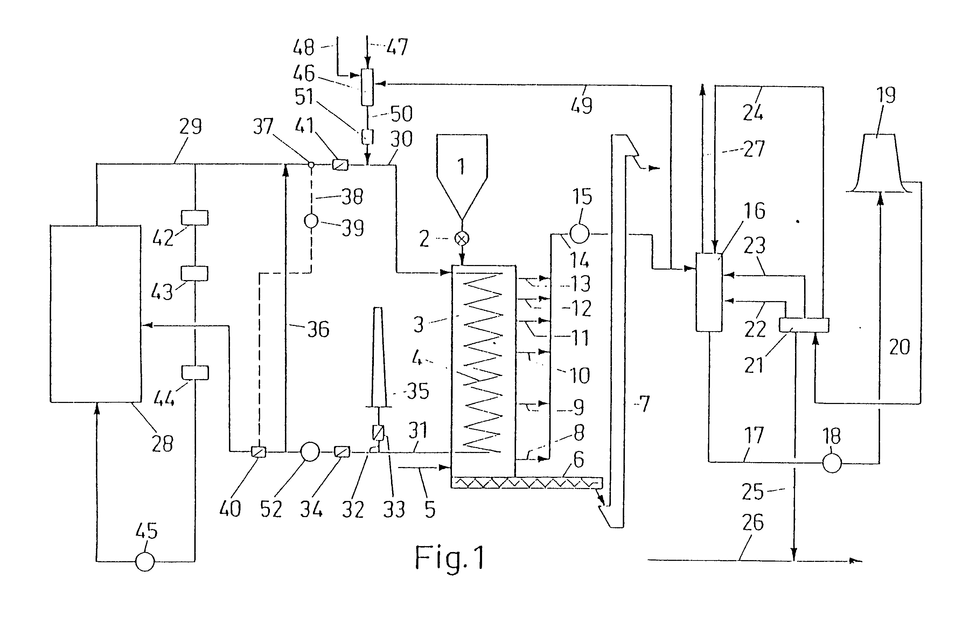

In Fig. 1 wird die zu verkokende Kohle aus dem Aufgabekunker 1 über die Zellenradschleuse 2 von oben auf den Wanderschichttrockner 3 aufgegeben. In diesem befinden sich die mit Heissgas aus der Kokstrockenkühlung beheizten Wärmeaustauschrohre 4, die an ihrer Aussenseite mit Flossen oder Rippen versehen sein können. Die aufgegebene Kohle wandert von oben nach unten durch den Wanderschichttrockner 3 und wird hierbei entsprechend erwärmt. Die Widerstände bei Fliessen der Kohle werden durch das eigene Gewicht überwunden, wobei die variable Verweilzeit der Kohle im Wanderschichttrockner 3 vom Abzug der Kohle im unteren Teil desselben bestimmt wird. Die getrocknete und vorerhitzte Kohle wird aus Wanderschichttrockner 3 über einen oder mehrere nebeneinander angeordnete. Schneckenförderer 6 und einen Kettenförderer 7 zum nicht dargestellten Kohleturm der Koksofenbatterie gefördert. Durch die Leitung 5 kann Inertgas in das Trockner-Förderer-System eingeblasen werden.

Die aus der feuchten Kohle abgeschiedenen abgashaltigen Brüden werden in verschiedenen Ebenen über die Leitungen 8-13 aus dem Wanderschichttrockner 3 abgezogen und gelangen über die Sammelleitung 14 und das Gebläse 15 in den Kreislaufwascher 16, in dem neben einer Kondensation gleichzeitig die Auswaschung von Verunreinigungen erfolgt. Anstelle der im Fliess-Schema dargestellten Wascherkonstruktion könnte hier natürlich auch eine andere Wascherkonstruktion, z. B. ein Venturiwascher, zur Anwendung gelangen. Die aus dem Kreislaufwascher 16 ablaufende Flüssigkeit wird über die Leitung 17 und die Pumpe 18 auf den Kühlturm 19 aufgegeben, in dem die weitere Abkühlung bis auf ca. 20°C erfolgt. Die gekühlte Flüssigkeit wird sodann über die Leitung 20 in den Kühlwasserverteiler 21 eingeleitet. Von hier wird das erforderliche Kühlwasser über die Leitungen 22-24 wieder auf die verschiedenen Ebenen des Kreislaufwaschers 16 aufgegeben. Die überschüssige Flüssigkeit wird über die Leitung 25 aus dem Kühlwasserverteiler 21 abgezogen und in den Abwasserkanal 26 eingeleitet. Gegebenenfalls kann auch in der zum Kühlturm 19 führenden Leitung 17 eine Abwasserbehandlungseinrichtung vorgesehen sein. Die aus dem Kreislaufwascher 16 entweichenden Gase werden über die Leitung 27 abgezogen und zum Kamin 35 geleitet.

Der aus dem Oberteil des Kokstrockenkühlers 28 mit einer Temperstur von ca. 800°C austretende heisse Gasstrom wird über die Leitung 29 abgezogen, von der die Gaseintrittsleitung 30 abzweigt, durch die der Teilstrom des heissen Gases abgezogen wird, der zur indirekten Wärmeübertragung im Wanderschichttrockner 3 genutzt wird. Dieser Teilstrom gelangt mit einer Temperatur von ca. 600°C in die Wärmeaustauschrohre 4 des Wanderschichttrockners 3. Nach Passieren derselben wird das Gas über die Gasaustrittsleitung 31 und das Gebläse 52 zum Kokstrockenkühler 28 zurückgefördert und in diesen nach entsprechender Verdichtung im mittleren Bereich mit einer Temperatur von ca. 250°C wieder eingeleitet. Von der Gasaustrittsleitung 31 zweigt die Leitung 32 ab, durch die bei entsprechender Stellung der Regelklappen 33 und 34 ein Teilstrom des Gases über den Kamin 35 in die Atmosphäre abgeblasen werden kann. Ausserdem ist hinter dem Gebläse 52 eine Bypass-Leitung 36 vorgesehen, durch die die Gasaustrittsleitung 31 mit der Gaseintrittsleitung 30 in Verbindung steht. Durch diese Bypass-Leitung 36 kann dem heissen Gas in der Gaseintrittsleitung 30 zum Zwecke der Temperaturregelung kaltes Gas aus der Gasaustrittsleitung 31 zugemischt werden. Hierfür ist in der Gaseintrittsleitung 30 der Temperaturmesspunkt 37 vorgesehen, wobei der dort ermittelte Wert über die unterbrochen eingezeichnete Impulsleitung 38 auf das Steuergerät 39 übertragen wird, welches seinerseits wiederum in Abhängigkeit von einem vorgegebenen Sollwert die motorbetriebene Regelklappe 40 in der Gasaustrittsleitung 31 betätigt. Bei einem Absinken der am Temperaturmesspunkt 37 ermittelten Gastemperatur unter den vorgegebenen Sollwert wird die Regelklappe 40 entsprechend weiter geöffnet, so dass die Gaszufuhr zum Kokstrockenkühler 28 vergrössert wird, Dies bewirkt natürlich auch eine Vergrösserung des Heissgasstromes in der Leitung 29 bzw. in der Gaseintrittsleitung 30, während gleichzeitig die Gasmenge, welche über die Bypass-Leitung 36 in die Gaseintrittsleitung 30 gelangen kann, entsprechend verringert wird. Hierdurch wird insgesamt ein Anstieg der Gastemperatur in der Gaseintrittsleitung 30 erreicht. Übersteigt dagegen umgekehr die am Temperaturmesspunkt 37 ermittelte Gastemperatur den vorgegebenen Sollwert, so wird die motorgetriebene Regelklappe 40 entsprechend gedrosselt, was natürlich zu einer Verminderung der Gaszufuhr zum Kokstrockenkühler 28 und gleichzeitig zu einer Vergrösserung der Kaltgaszufuhr über die Bypass-Leitung 36 führt. Dies hat dann wiederum das gewünschte Absinken der Gastemperatur in der Gaseintrittsleitung 30 zur Folge. Zur weiteren Regulierung des Gasstromes in dieser Leitung ist ausserdem noch die Regelklappe 41 vorgesehen.

Der nicht zur Kohlevorerhitzung genutate Teilstrom des aus dem Kokstrockenkühler 28 austretenden heissen Gases gelangt in der Leitung 29 nacheinander durch die Einrichtungen 42, 43 und 44, in denen das Gas den Anforderungen entsprechend entsaubt und abgekühlt wird. Das heisst, bei diesen Einrichtungen kann es sich entweder um Staubabscheider oder um Abhitzekessel bzw. Gaskühler handeln. Das entstaubte und auf ca. 150°C abgekühlte Gas wird anschliessend in dem Gebläse 45 wieder auf den Betriebsdruck des Kokstrockenkühlers 28 verdichtet und in diesen von unten eingeleitet.

Das heisst, beim erfindungsgemässen Verfahren ist die Wiedereileitung des im Kreislauf geführten Gases an zwei verschiedenen Stellen des Kokstrockenkühlers 28 vorgesehen, wobei nur der Teilstrom, welcher nicht zur Kohlevorerhitzung herangezogen wird, in an sich bekannter Weise in den Unterteil des Kokstrokkenkühlers 28 eingeleitet wird. Der vom Wanderschichttrockner 3 kommende Teilstrom des Gases wird dagegen in den mittleren Teil des Kokstrockenkühlers 28 eingeleitet, in dem der zu kühlende Koks noch eine Temperatur von ca. 400-600°C aufweist. Durch diese Arbeitsweise wird einerseits der Druckverlust des Gases im Kokstrockenkühler 28 herabgesetzt. Andererseits ergibt sich dadurch eine günstige Beeinflussung der Temperatur-differenzen zwischen dem Gas und dem zu kühlenden Koks und ausserdem ist damit eine verbesserte Regelbarkeit sowohl im Hinblick auf die Gaszufuhr als auch im Hinblick auf die Wärmeabfuhr aus dem zu kühlenden Koks verbunden.

Damit die Kohlevorerhitzung im Wanderschichttrockner 3 bei einem Ausfall bzw. einer Betriebsstörung des Kokstrockenkühlers 28 nicht beeinträchtigt wird, ist zusätzlich eine Verbrennungskammer 46 vorgesehen, der über die Leitung 47 ein gasförmiger, flüssiger oder fester Brennstoff sowie über die Leitung 48 der erforderliche Sauerstoff (Luft) zugeführt wird. Da die bei der Verbrennung entstehenden heissen Rauchgase mit ca. 1400°C eine zu hohe Temperatur aufweisen, wird über die Leitung 49 Wasserdampf zugeführt, der aus der Leitung 14 abgezweigt wurde. Durch diese Wasserdampfzugabe kann die Rauchgastemperatur auf den gewünschten Wert von beispielsweise 600°C herabgedrückt werden, und mit dieser Temperatur wird das Gas sodann über die Leitung 50 in die Gaseintrittsleitung 30 eingespeist. In der Leitung 50 ist die Regelklappe 51 vorgesehen, so dass die abgegebene Gasmenge gegebenenfalls auch entsprechend gedrosselt und die Verbrennungskammer 46 im Bedarfsfalle auch als Zusatzheizung eingesetzt werden kann.

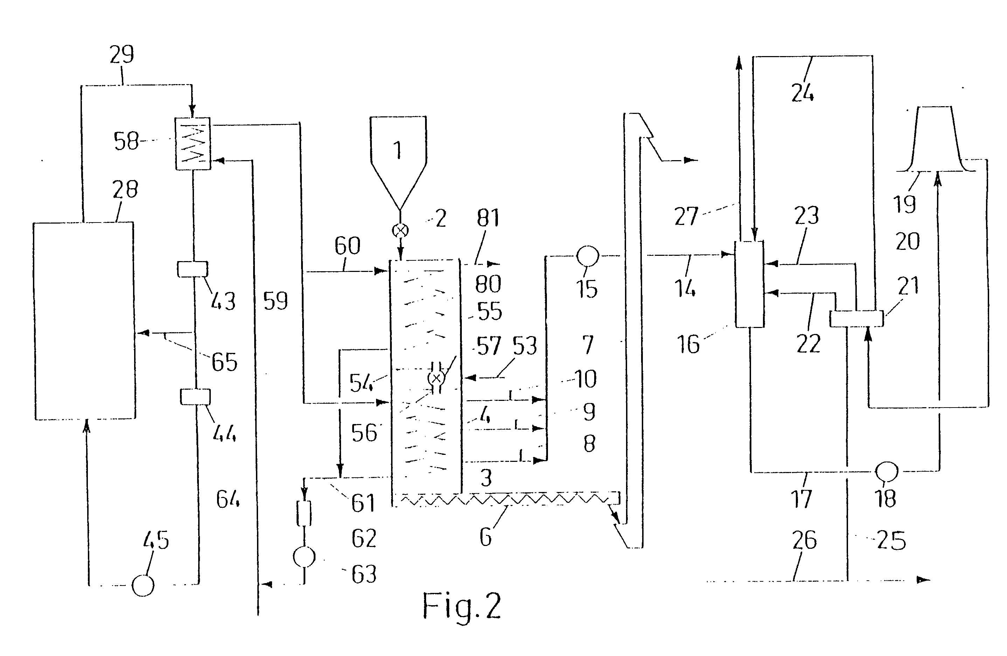

Das in Fig. 2 dargestellte Fliess-Schema betrifft eine Verfahrensvariante, bei der dem Wanderschichttrockner 3 ein Wirbelschichttrockner 80 vorgeschaltet ist und ausserdem für die Beheizung der beiden Trockner anstelle von Heissgas Abhitzedampf aus der Kokstrockenkühlung verwendet wird. Grundsätzlich haben natürlich übereinstimmende Bezugszeichen in beiden Fliess-Schemata (Fig. 1 und Fig. 2) die gleiche Bedeutung. Bei dem in Fig. 2 dargestellten Fliess-Schema sind der Wirbelschichttrockner 80 und der Wanderschichttrockner 3 unmittelbar übereinander angeordnet und zu einer baulichen Einheit integriert. Die Kohle, die einen Wassergehalt von ca. 9 Gew.-% aufweist, gelangt dabei aus dem Aufgabebunker 1 über die Zellenradschleuse 2 zunächst in den Oberteil des Wirbelschichttrockners 80, in dem sie zu einer Kohle-Wasserdampf-Wirbelschicht suspendiert wird. Der hierfür erforderliche Wasserdampf wird über die Leitung 53 und den gas- bzw, dampfdurchlässigen Anströmboden 54 in den Wirbelschichttrockner 80 eingeleitet. Für die notwendige Erhitzung der Kohle im Wirbelschichttrockner 80 sorgen die Wärmeaustauschrohre 55. Hierbei wird die Kohle im Wirbelschichttrockner 80 zunächst bis auf eine Temperatur von ca. 65°C erhitzt und bis auf einen Wassergehalt von ca. 5 Gew.-% getrocknet. Dieser Trocknungsgrad reicht in diesem Falle aus, um die Fliessfähigkeit der Kohle im Wanderschichttrockner 3 zu gewährleisten. Daran anschliessend gelangt die Kohle deshalb über das mit einer Zellenradschleuse 57 versehene Förderrohr 56 in den unmittelbar darunter liegenden Wanderschichttrockner 3, in dem die weitere Erhitzung derselben bis auf eine Endtemperatur von 200°C und die Trocknung bis auf einen Restwassergehalt von 0,1 Gew.-% erfolgt. Der Brüden- und Kohleabzug aus dem Wanderschichttrockner 3 sowie die Brüdenbehandlung entsprechen der Arbeitsweise gemäss Fig. 1 und brauchen deshalb hier nicht mehr näher erläutert zu werden. Im Oberteil des Wirbelschichttrockners 80 ist die Leitung 81 vorgesehen, durch die die anfallenden Brüden aus dem Trockner abgezogen werden. Diese Brüden können nach teilkondensation und Wiederaufheizung zur Leitung 53 zurückgeführt und erneut zur Fluidisierung der Kohle im Wirbelschichttrockner 80 verwendet werden. Für die Brüdenteilkondensation können die hierfür bereits vorhandenen Einrichtungen des Wanderschichttrockners 3 mitverwendet werden.

Der aus dem Oberteil des Kokstrockenkühlers 28 über die Leitung 29 austretende heisse Gasstrom wird in diesem Falle in seiner Gesamtheit in den Abhitzekessel 58 eingeleitet. Der hier erzeugte Abhitzedampf wird über die Leitungen 59 und 60 den Wärmeaustauschrohren 4 und 55 des trocknersystems zugeführt. Nach Passieren derselben gelangt der abgekühlte kondensathaltige Sattdampf über die Leitung 61, den Kondensatabscheider 62 und die Pumpe 63 in die Speisewasserleitung 64, die zum Abhitzekessel 58 zurückführt. Bei der Kreislaufführung des Kühlgases der Kokstrockenkühlung ist auch wiederum vorgesehen, dass ein Teilstrom des Gases aus der Leitung 29 abgezogen und über die Leitung 65 in den mittleren Teil des Kokstrockenkühlers 28 eingeleitet wird.

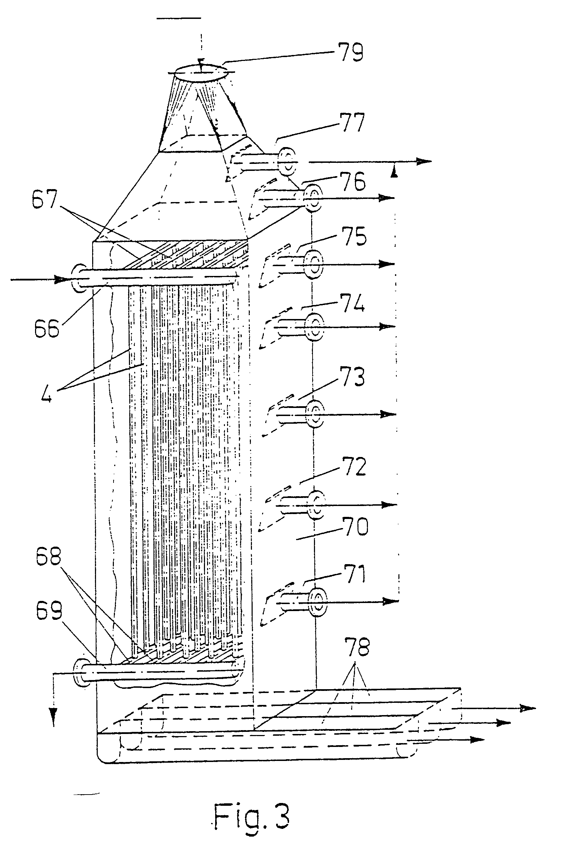

In Fig. 3 ist schliesslich ein Wanderschichttrockner dargestellt, der für die Durchführung des erfindungsgemässen verfahrens zur Anwendung gelangen kann. Da der als Ausführungsbeispiel dargestellte Trockner mit Dampf beheizt werden soll, sind die Wärmeaustauschrohre 4 in diesem Falle senkrecht angeordnet, um eine gleichmässige Kondensierung des Sattdampfes zu gewährleisten. Die Wärmeaustauschrohre 4 sollen hierbei als sogen. Flossenrohre ausgebildet sein, um den Wärmeaustauscheffekt weiter zu verbessern. Wenn anstelle von Dampf Heissgas zur Beheizung der Wärmeaustauschrohre 4 vorgesehen ist, dann können dieselben natürlich auch horizontal oder geneigt angeordnet sein. Die Dampfzufuhr erfolgt über die Leitung 66, von der die Verbindungsleitungen 67 zu den einzelnen Wärmeaustauschrohren 4 abzweigen. Ein entsprechendes Rohrsystem 68;. 69 ist auch im Unterteil des Trockners für den Abzug des kondensathaltigen Sattdampfes vorgesehen. Das Gehäuse 70, das das Rohrsystem beherbergt, wird aus Stahl gefertigt und kann auf der Innenseite mit einer verschleissfesten Auskleidung versehen sein. Aussen kann im Bedarfsfalle eine Isolierung angebracht werden, die den Trockner ausreichend gegen Wärmeverluste schützt. Auf der dem Dampfeintritt gegenüber liegenden Seite sind im Gehäuse 70 auf verschiedenen Ebenen die Abzugsstutzen 71-77 für den Abzug der abgashaltigen Brüden vorgesehen, wie durch Pfeile angedeutet wird. Im Oberteil weist das Gehäuse 70 in Richtung auf die Kohleaufgabe 79 eine konische Verjüngung auf. Dadurch wird erreicht, dass die von oben aufgegebene Kohle sich beim Eintritt in den Wanderschichttrockner gleichmässig verteilt. Unterhalb des Gehäuses 70 sind die Wannen 78 angeordnet, in denen die Schneckenförderer 6 (Fig. 1 und 2) untergebracht sind, die die Kohle aus dem Wanderschichttrockner abtransportieren.

**Patentansprüche**

1. Verfahren zum Betrieb einer Kokereianlage, bei dem die Koksöfen periodisch mit vorerhitzter Kohle beschickt werden und der erzeugte Koks einer Trockenkühlung mittels eines gasförmigen Kühlmediums unterworfen wird, wobei die aus der Kokstrockenkühlung abgeführte Wärme direkt oder indirekt zur Kohlevorerhitzung genutzt wird, dadurch gekennzeichnet, daß die Kohlevorerhitzung unter Verwendung eines Wanderschichttrockners durchgeführt wird, dessen Wärmeaustauschrohre mit Heißgas oder Abhitzedampf aus der Kokstrockenkühlung beheizt werden, wobei das Heißgas oder der Abhitzedampf im Gleichstrom mit der Kohle von oben nach unten durch die Wärmeaustauschrohre geleitet und die im Wanderschichttrockner anfallenden abgashaltigen Brüden in verschiedenen Ebenen aus demselben abgezogen, gereinigt, abgekühlt, kondensiert und anschließend dem Abwasser zugeführt werden.

2. Verfahren nach Anspruch 1, dadurch gekennzeichnet, dass dem Wanderschichttrockner ein Wirbelschichttrockner vorgeschaltet ist, wobei die Kohle im Wirbelschichttrockner durch Erhitzung auf eine Temperatur zwischen 60 und 100°C zunächst nur soweit getrocknet wird, dass eine ausreichende Fliessfähigkeit derselben im Wanderschichttrockner sichergestellt ist, in dem die Kohle sodann bis auf eine Endtemperatur von 200°C erhitzt und bis auf einen Restwassergehalt von 0,1 Gew.-% getrocknet wird.

3. Verfahren nach den Ansprüchen 1 und 2, dadurch gekennzeichnet, dass für die Beheizung des Wanderschichttrockners und/oder des Wirbelschichttrockners gegebenenfalls Rauchgase verwendet bzw. mitverwendet werden, die durch Verbrennung eines festen, flüssigen oder gasförmigen Brennstoffes in einer separaten Verbrennungskammer erzeugt werden, wobei die Gastemperatur durch Zumischung von Wasserdampf auf den gewünschten Wert eingestellt wird.

4. Verfahren nach den Ansprüchen 1 bis 3, dadurch gekennzeichnet, dass der für die Einstellung der Gastemperatur erforderliche Wasserdampf ganz oder teilweise aus dem bei der Kohlevorerhitzung anfallenden Brüdenstrom abgezweigt wird.

5. Wanderschichttrockner zur Durchführung des Verfahrens nach den Ansprüchen 1 bis 4, dadurch gekennzeichnet, dass derselbe Wärmeaustauschrohre (4) besitzt, die kohleseitig eine durch geeignete Formgebung, z.B. durch Flossen oder Rippen, vergrösserte Oberfläche aufweisen und die in einem Gehäuse (70) untergebracht sind, das in Richtung auf die Kohleaufgabe (79) eine konische Verjüngung sowie auf der dem Dampf- bzw. Heissgaseintritt gegenüberliegenden Seite auf verschiedenen Ebenen Abzugsstutzen (71-77) für den Abzug abgashailtigen Brüden aufweist.

## Revendications

1. Procédé d'exploitation d'une installation de cokerie, dans lequel les fours à coke sont périodiquement chargés avec de la houille préchauffée et le coke produit est soumis à un refroidissement à sec au moyen d'un fluide refroidisseur à l'état gazeux, tandis que la chaleur évacuée du dispositif de refroidissement à sec du coke est utilisée directement ou indirectement au préchauffage de la houille, caractérisé par le fait que le préchauffage de la houille est exécuté en faisant appel à un séchoir à couche migrante dont les tubes échangeurs de chaleur sont chauffés par des gaz chauds ou de la vapeur de récupération de chaleur en provenance du refroidissement à sec du coke, tandis que les gaz chauds ou la vapeur de récupération de la chaleur sont dirigés pour passer dans le même sens d'écoulement que la houille du haut vers le bas à travers les tubes échangeurs de chaleur et que les buées contenant des gaz brûlés, telles qu'elles sont formées au sein du séchoir à couche migrante, sont soutirées de ce dernier à différents niveaux, puis épurées, refroidies, condensées et finalement évacuées dans les eaux usées.

2. Procédé suivant la revendication 1, caractérisé par le fait que le séchoir à couche migrante est précédé d'un séchoir à lit fluidisé, tandis que la houille est séchée dans une première phase dans le séchoir à lit fluidisé par un échauffement à une température entre 60 et 100°C uniquement à un stade qui assure des propriétés de fluidité suffisantes de la houille dans le séchoir à couche migrante, dans lequel la houille est alors chauffée à une température finale de 200°C et séchée ainsi jusqu'à présenter une teneur résiduelle en eau de 0,1 % en poids.

3. Procédé suivant les revendications 1 et 2, caractérisé par le fait que pour chauffer le séchoir à couche migrante et/ou le séchoir à lit fluidisé, il est prévu le cas échéant d'utiliser ou d'utiliser conjointement avec d'autres caloporteurs des gaz de combustion générés par la combustion d'un combustible solide, liquide ou gazeux dans une chambre de combustion séparée, tandis que la température des gaz est ajustée à la valeur recherchée en y mélangeant de la vapeur d'eau.

4. Procédé suivant les revendications 1 à 3, caractérisé par le fait que la vapeur d'eau nécessaire pour ajuster la température des gaz est dérivée en tout ou partie du débit des vapeurs recueillies dans le préchauffage de la houille.

5. Séchoir à couche migrante prévu pour la mise en ceuvre du procédé suivant les revendications 1 à 4, caractérisé par le fait que celui-ci possède des tubes (4) échangeurs de chaleur qui présentent côté houille une superficie augmentée par un modelage approprié, par exemple par des ailerons ou des nervures, et sont logés dans une carcasse (70) qui présente dans la direction du chargement (79) de la houille une forme conique allant en se rétrécissant vers le haut, ainsi que, sur le côté opposé à l'admission de la vapeur ou des gaz chauds, à différents niveaux, des tubulures d'évacuation (71 à 77) pour l'évacuation des vapeurs contenant des gaz brülés.

## Claims

1. Process for operating a coke oven plant, in which process the coke ovens are periodically charged with preheated coal and the coke produced is subjected to a dry cooling process by means of a gaseous coolant, the heat which is removed from the dry coke-cooling process being utilised, directly or indirectly, for preheating the coal, characterised in that the preheating of the coal is carried out by using a moving-bed drier, the heat-exchange tubes of this drier being heated by hot gas or by waste-heat steam from the dry coke-cooling process, whereby the hot gas or the waste-heat steam are passing the heat-exchange tubes concurrently with the coal from the top to the bottom and the exhaust vapours which are generated in the moving-bed drier and contain waste gas being withdrawn from the drier at various levels, cleaned, cooled, condensed and thereafter fed to the waste water.

2. Process according to Claim 1, characterised in that a fluidized-bed drier is connected upstream of the moving-bed drier, the coal being initially dried in the fluidized-bed drier, by heating to a temperature between 60 and 100°C, only to the extent of ensuring that it can flow sufficiently freely in the moving-bed drier, in which the coal is then heated to a final temperature of 200°C and dried to a residual water content of 0.1 % by weight.

3. Process according to Claims 1 and 2, characterised in that, if appropriate, flue gases are used, alone or with other gases, for heating the moving-bed drier and/or the fluidized-bed drier, these gases being produced by the combustion of a solid, liquid or gaseous fuel, in a separate combustion chamber, the gas temperature being adjusted to the desired value by the admixture of water vapour.

4. Process according to Claims 1 to 3, characterised in that the water vapour required for the adjustment of the gas temperature is branched off, wholly or in part, from the stream of exhaust vapours which is generated during the preheating of the coal.

5. Moving-bed drier for carrying out the process according to Claims 1 to 4, characterised in that this drier possesses heat-exchange tubes (4), which exhibit an extended surface on the coal side, this extended surface being produced by suitable shaping, for example by fins or ribs, these tubes being accommodated in a casing (70), which exhibits a conical taper towards the coal chargingport (79), as well as offtake nozzles (71-77) for withdrawing the exhaust vapours which contain waste gas, these nozzles being located on the side opposite the steam and/or hot gas inlet, at various levels.

Fig.1

Fig.2

Fig.3